# EUROPEAN PATENT APPLICATION

(11) **EP 4 362 153 A1**
(43) Date of publication of application: **01.05.2024**
(21) Application number: 23205869.3
(22) Date of filing: 25.10.2023
(51) Int. Cl.: H01M 10/04, H01M 50/107, H01M 50/152, H01M 50/169, H01M 50/474, H01M 50/528, H01M 50/548, H01M 50/559

(54) **SECONDARY BATTERY**

(30) Priority: 26.10.2022 KR 20220139409
(71) Applicant: Samsung SDI Co., Ltd., Yongin-si, Gyeonggi-do 17084 (KR)
(72) Inventor: LEE, Sang Hyo, 17084 Yongin-si (KR)
(74) Representative: Marks & Clerk LLP

(57) **Abstract**

The present disclosure relates to a battery capable of improving safety by reducing a current path between an electrode plate and a can (100). Disclosed in an example is a battery including a can (100) having an upper end and a lower end, an upper plate (500) coupled to the upper end of the can, a lower plate (600) coupled to the lower end of the can, an electrode assembly (200) inside the can, and including a first electrode uncoated portion extending upwardly, and a second electrode uncoated portion extending downwardly, a first current collector plate (300) electrically connected to the first electrode uncoated portion, and a second current collector plate (400) electrically connected to the second electrode uncoated portion, and coupled between the lower end of the can and the lower plate.

## Description

### BACKGROUND

### 1. Field

Various embodiments of the present disclosure relate to a secondary battery.

### 2. Description of the Related Art

A secondary battery is a power storage system that provides suitable energy density, and can convert electrical energy into chemical energy, and can store the same. Compared to non-rechargeable primary batteries, secondary batteries are rechargeable, and are widely used in IT devices, such as smart phones, cellular phones, notebooks, and tablet PCs. Recently, interest in electric vehicles has increased to prevent or reduce environmental pollution, and accordingly, high-capacity secondary batteries are being adopted for electric vehicles. These secondary batteries may suitably have characteristics, such as high density, high power, and stability.

The above information disclosed in this Background section is only for enhancement of understanding of the background of the present disclosure and therefore it may contain information that does not constitute prior art.

### SUMMARY

The present disclosure provides a cylindrical secondary battery capable of improving safety by reducing a current path between an electrode plate and a can.

A battery according to embodiments of the present disclosure includes a can having an upper end and a lower end, an upper plate coupled to the upper end of the can, a lower plate coupled to the lower end of the can, an electrode assembly inside the can, and including a first electrode uncoated portion extending upwardly, and a second electrode uncoated portion extending downwardly, a first current collector plate electrically connected to the first electrode uncoated portion, and a second current collector plate electrically connected to the second electrode uncoated portion, and coupled between the lower end of the can and the lower plate.

The second current collector plate may include a flat portion electrically connected to the second electrode uncoated portion, and an extension portion extending from the flat portion, and electrically connected to the can.

An inner surface of the lower end of the can may define a lower coupling groove at which the lower end of the can is coupled to the extension portion.

The lower plate may include a protrusion protruding downwardly from an edge thereof, and coupled to the lower end of the can adjacent the lower coupling groove, wherein the extension portion is between the protrusion and the lower end of the can adjacent the lower coupling groove.

A thickness of the lower end of the can adjacent the lower coupling groove may be less than a thickness of other regions of the can.

The extension portion may include a first region bent from, and extending downwardly from, the flat portion, a second region bent from, and extending laterally from, the first region, and a third region bent from, and extending downwardly from, the second region, wherein the second region and the third region contact the lower end of the can adjacent the lower coupling groove.

The second current collector plate and the lower plate may be electrically connected to the lower end of the can by welding.

The lower plate and the second current collector plate may be coupled to the lower end of the can in an interference fitting manner.

The lower plate may define a notch at an inner surface thereof.

The battery may further include an upper insulator between the first current collector plate and the upper plate, and a spacer between the second current collector plate and the lower plate.

The battery may further include a terminal portion including a base block electrically connected to the first current collector plate, a head extending above the base block and protruding above the upper plate, and an insulating member between the upper plate and both the base block and the head.

The terminal portion may further include a fusible link connecting the base block and the head, and having a diameter that is less than a diameter of the head.

An inner surface of the upper end of the can may define an upper coupling groove at which the upper end of the can is coupled to the upper plate.

The battery may be a cylindrical secondary battery.

At least some of the above and other features of the invention are set out in the claims.

### BRIEF DESCRIPTION OF DRAWINGS

FIG. 1 is a cross-sectional view illustrating a cylindrical secondary battery according to one or more embodiments of the present disclosure.
FIG. 2 is an exploded perspective view illustrating a lower portion of the cylindrical secondary battery of FIG. 1.
FIG. 3 is an enlarged cross-sectional view illustrating an upper plate and a terminal portion of FIG. 1.
FIG. 4 is a cross-sectional view illustrating a terminal portion according to one or more other embodiments of the present disclosure.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The present disclosure covers all modifications, equivalents, and replacements within the idea and technical scope of the present disclosure. Further, each of the features of the various embodiments of the present disclosure may be combined or combined with each other, in part or in whole, and technically various interlocking and driving are possible. Each embodiment may be implemented independently of each other or may be implemented together in an association.

In the drawings, the relative sizes of elements, layers, and regions may be exaggerated for clarity and/or descriptive purposes. Additionally, the use of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified.

Various embodiments are described herein with reference to sectional illustrations that are schematic illustrations of embodiments and/or intermediate structures. As such, variations from the shapes of the illustrations as a result, for example, of manufacturing techniques and/or tolerances, are to be expected. Further, specific structural or functional descriptions disclosed herein are merely illustrative for the purpose of describing embodiments according to the concept of the present disclosure. Thus, embodiments disclosed herein should not be construed as limited to the illustrated shapes of elements, layers, or regions, but are to include deviations in shapes that result from, for instance, manufacturing.

Spatially relative terms, such as "beneath," "below," "lower," "lower side," "under," "above," "upper," "upper side," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below," "beneath," "or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. Similarly, when a first part is described as being arranged "on" a second part, this indicates that the first part is arranged at an upper side or a lower side of the second part without the limitation to the upper side thereof on the basis of the gravity direction.

Further, the phrase "in a schematic cross-sectional view" means when a schematic cross-section taken by vertically cutting an object portion is viewed from the side. The terms "face" and "facing" may mean that a first object may directly or indirectly oppose a second object. In a case in which a third object intervenes between a first and second object, the first and second objects may be understood as being indirectly opposed to one another, although still facing each other.

It will be understood that when an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or intervening layers, regions, or components may be present. However, "directly connected/directly coupled," or "directly on," refers to one component directly connecting or coupling another component, or being on another component, without an intermediate component. In addition, in the present specification, when a portion of a layer, a film, an area, a plate, or the like is formed on another portion, a forming direction is not limited to an upper direction but includes forming the portion on a side surface or in a lower direction. On the contrary, when a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components such as "between," "immediately between" or "adjacent to" and "directly adjacent to" may be construed similarly. In addition, it will also be understood that when an element or layer is referred to as being "between" two elements or layers, it can be the only element or layer between the two elements or layers, or one or more intervening elements or layers may also be present.

For the purposes of this disclosure, expressions such as "at least one of," or "any one of," or "one or more of' when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XYY, YZ, and ZZ, or any variation thereof. Similarly, the expression such as "at least one of A and B" and "at least one of A or B" may include A, B, or A and B. As used herein, "or" generally means "and/or," and the term "and/or" includes any and all combinations of one or more of the associated listed items. For example, the expression such as "A and/or B" may include A, B, or A and B. Similarly, expressions such as "at least one of," "a plurality of," "one of," and other prepositional phrases, when preceding a list of elements, modify the entire list of elements and do not modify the individual elements of the list.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

The terminology used herein is for the purpose of describing particular embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

When one or more embodiments may be implemented differently, a specific process order may be performed differently from the described order. For example, two consecutively described processes may be performed substantially at the same time or performed in an order opposite to the described order.

As used herein, the terms "substantially," "about," "approximately," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

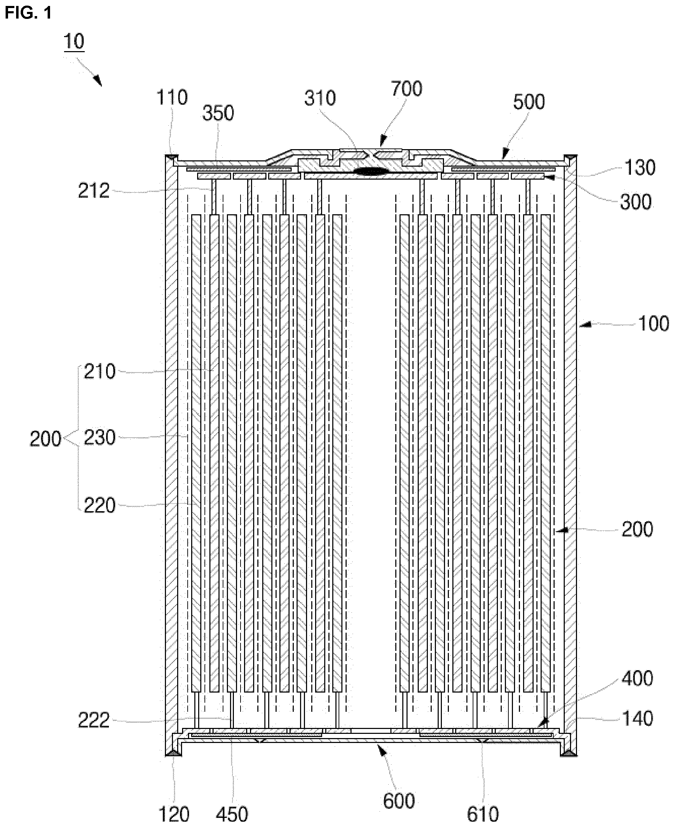

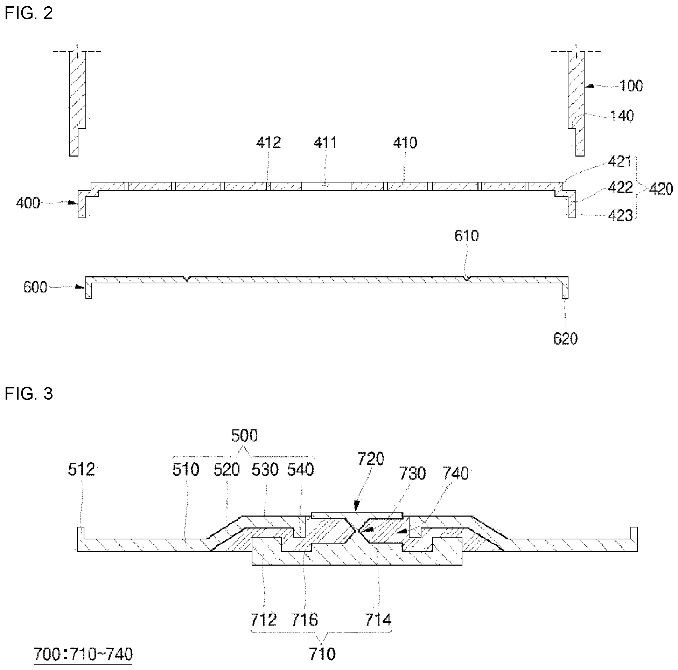

FIG. 1 is a cross-sectional view illustrating a cylindrical secondary battery according to one or more embodiments of the present disclosure. FIG. 2 is an exploded perspective view illustrating a lower portion of the cylindrical secondary battery of FIG. 1. FIG. 3 is an enlarged cross-sectional view illustrating an upper plate and a terminal portion of FIG. 1.

Referring to FIG. 1, the cylindrical secondary battery 10 according to one or more embodiments of the present disclosure may include a can (e.g., a cylindrical can) 100, an electrode assembly 200, a first current collector plate 300, a second current collector plate 400, an upper plate 500, a lower plate 600, and a terminal portion 700. The electrode assembly 200 may be accommodated inside the can 100 together with an electrolyte. The electrode assembly 200 may be electrically connected to the first current collector plate 300, the second current collector plate 400, the terminal portion 700, and the can 100. The electrode assembly 200 connected to the first current collector plate 300 and the second current collector plate 400 may be inserted into the can 100, and the can 100 may be sealed by respectively assembling the upper plate 500 and the lower plate 600 to the upper and lower portions of the can 100.

As shown in FIG. 1, the can 100 may have a hollow cylindrical shape, one end and the other end of which are open in the longitudinal direction. In other words, the can 100 may be a can having open upper and lower ends. The can 100 may be made of steel, a steel alloy, nickel-plated steel, a nickel-plated steel alloy, aluminium, an aluminium alloy, or an equivalent thereof, but is not limited thereto.

The can 100 may include an upper coupling groove 130 and a lower coupling groove 140. The upper coupling groove 130 may be formed inside the upper end of the can 100. The upper plate 500 may be coupled to the upper coupling groove 130. The lower coupling groove 140 may be formed inside the lower end of the can 100. The second current collector plate 400 and the lower plate 600 may be coupled to the lower coupling groove 140. Due to the upper coupling groove 130 and the lower coupling groove 140, the upper and lower ends of the can 100 may have a smaller thickness, or may be thinner, than other regions of the can 100.

Referring to FIG. 1, the electrode assembly 200 may include a first electrode plate 210, a second electrode plate 220, and a separator 230. In one or more embodiments, the first electrode plate 210 may be a positive electrode plate having a positive electrode active material layer (e.g., a transition metal oxide (LiCoO₂, LiNiO₂, LiMn₂O₄, etc.)) formed on both surfaces. A first electrode uncoated portion 212, on which a positive electrode active material layer is not formed, may be formed on a portion of the first electrode plate 210. The first electrode uncoated portion 212 may be located to face an upper portion of the can 100, which is one end of the can 100, with reference to FIG. 1.

In one or more embodiments, the second electrode plate 220 may be a negative electrode plate having negative electrode active material layers (e.g., graphite, carbon, etc.) formed on both surfaces. A second electrode uncoated portion 222, on which the negative electrode active material layer is not formed, may be formed on a portion of the second electrode plate 220. The second electrode uncoated portion 222 may be located toward the bottom of the can 100, which is the other end of the can 100, with reference to FIG. 1.

In one or more embodiments, the separator 230 is interposed between the first electrode plate 210 and the second electrode plate 220 to prevent or reduce the likelihood of a short circuit, and to allow only the movement of lithium ions. For example, the first electrode plate 210 may be an aluminium (Al) foil, the second electrode plate 220 may be a copper (Cu) or nickel (Ni) foil, and the separator 230 may be polyethylene (PE) or polypropylene (PP), but these materials are not limited in the present disclosure.

The first electrode plate 210, the second electrode plate 220, and the separator 230 may be wound in a substantially cylindrical shape, and may be accommodated inside the can 100. In one or more embodiments, the first electrode uncoated portion 212 may be electrically connected to the first current collector plate 300, and the second electrode uncoated portion 222 may be electrically connected to the second current collector plate 400.

Referring to FIG. 1, the first current collector plate 300 may be located between the first electrode uncoated portion 212 and the upper plate 500 to be electrically connected to the first electrode uncoated portion 212. The first current collector plate 300 may be electrically connected to the terminal portion 700, which will be described later, by welding (e.g., a welding portion 310). For example, the terminal portion 700 may be welded to the upper surface of the first current collector plate 300, and the first electrode uncoated portion 212 may be welded to the lower surface of the first current collector plate 300. Accordingly, because the first electrode uncoated portion 212 and the terminal portion 700 are electrically connected, the terminal portion 700 may become a positive electrode.

An upper insulator 350 may be inserted between the first current collector plate 300 and the upper plate 500. The upper insulator 350 may insulate the first current collector plate 300 and the upper plate 500 from each other.

The second current collector plate 400 may be located between the second electrode uncoated portion 222 and the lower plate 600, and may be electrically connected to the second electrode uncoated portion 222. The second current collector plate 400 may be in contact with, and may be welded to, the lower plate 600 and the can 100 to be electrically connected. Accordingly, because the second electrode uncoated portion 222 and the can 100 are electrically connected, the can 100 may become a negative electrode.

Referring to FIGS. 1 and 2, the second current collector plate 400 may include a flat portion 410, and an extension portion 420 extending outwardly from the flat portion 410 and connected to the can 100. The second electrode uncoated portion 222 may be electrically connected to an upper surface of the flat portion 410. For example, the second electrode uncoated portion 222 may be electrically connected to the flat portion 410 of the second current collector plate 400 by welding.

The flat portion 410 may include, or define, a first hole 411 located at the center, and a plurality of second holes 412 located outside, or around, the first hole 411. The first hole 411 is located at the center of the flat portion 410, and may serve as a passage through which internal gas is moved or discharged. In some embodiments, the first hole 411 may be provided as a passage through which an electrolyte is injected. In some embodiments, the first hole 411 may be provided as a passage through which a welding rod is inserted to weld the first current collector plate 300 and the terminal portion 700.

The plurality of second holes 412 are formed outside the first hole 411, and the diameter of each of the second holes 412 may be less than that of the first hole 411. The second holes 412 may be provided as passages through which the electrolyte is injected. In some embodiments, the second holes 412 may be provided as passages through which internal gas is moved or discharged. For example, the internal gas moved to the lower portion of the can 100 through the first hole 411 and the second holes 412 may break a notch 610 of the lower plate 600, and may be discharged to the outside.

The extension portion 420 may be bent downward from the flat portion 410, and may extend therefrom. The extension portion 420 may be located outside the flat portion 410. In some embodiments, the extension portion 420 may be coupled to the lower coupling groove 140 of the can 100, and may be electrically connected to the can 100. In some examples, the extension portion 420 may be brought into close contact with the can 100 by the lower plate 600. In other words, as the lower plate 600 is inserted into the extension portion 420, the extension portion 420 may be in close contact with the can 100.

The extension portion 420 may include a first region 421, a second region 422, and a third region 423. The first region 421 may be bent downward from the flat portion 410, and may extend therefrom. The second region 422 may be bent from the first region 421, and may extend in a lateral direction (outward direction) to contact the lower coupling groove 140. The third region 423 may be bent downward from the second region 422, and may extend to contact the lower coupling groove 140 (or the inner surface of the can). For example, the second region 422 and the third region 423 of the extension portion 420 may be seated on/against, and may contact, the lower coupling groove 140. An end of the third region 423 may be substantially coplanar with the lower end of the can 100.

As such, according to the present disclosure, the second current collector plate 400 is interposed between the can 100 and the lower plate 600 to be coupled together, thereby shortening the current path of the second current collector plate 400, and reducing the internal resistance. Thus, the safety of the secondary battery can be improved. In some embodiments, the second current collector plate 400 is directly connected to the can 100, thereby reducing a dead space.

A spacer 450 may be inserted between the second current collector plate 400 and the lower plate 600. The spacer 450 may serve to maintain a gap between the second current collector plate 400 and the lower plate 600.

As shown in FIGS. 1 and 3, the upper plate 500 substantially has a disk shape when viewed from above, and may be coupled and welded to the upper portion of the can 100 to seal the can 100. The upper plate 500 may be made of aluminium, and/or may be made of the same material as the can 100. The upper plate 500 may have a ring-shaped disk that is hollow in the center (e.g., a hollow portion).

In one or more embodiments, the upper plate 500 may include a first flat portion 510 that is parallel to the first current collector plate 300, an inclined portion 520 connected to, and inclined upward from, the first flat portion 510, a second flat portion 530 connected to the inclined portion 520 and substantially parallel to the first flat portion 510, and an extension portion 540 vertically extending downward from the second flat portion 530. The inclined portion 520 may extend upward to form an obtuse angle with respect to the first flat portion 510.

A protrusion 512, which protrudes upward along the edge of the first flat portion 510, may be formed. The protrusion 512 may be seated in the upper coupling groove 130 of the can 100. The protrusion 512 may form a welding part 110 coupled to the can 100 by being melted by laser welding after being seated in the upper coupling groove 130. The first flat portion 510 is welded to the can 100, and thus may have a negative polarity, like the can 100.

The second flat portion 530 may be formed to have a smaller area than the first flat portion 510. The second flat portion 530 has one end connected to the inclined portion 520, and another end facing the hollow portion that may be bent downward to form the extension portion 540. The terminal portion 700 may be located below the second flat portion 530 and the extension portion 540.

Referring to FIGS. 1 and 2, the lower plate 600 substantially has a disk shape when viewed from below, and may be coupled to the lower portion of the can 100 to seal the can 100. The notch 610 may be formed on, or defined by, an inner surface of the lower plate 600. The notch 610 may be broken if the pressure of the gas inside the can 100 exceeds a corresponding pressure (e.g., a predetermined pressure). In some examples, the notch 610 may have a ring shape continuously formed on the lower plate 600. In some embodiments, the notch 610 may correspond to a plurality of notches spaced apart from each other. The notch 610 is formed on the inner surface of the lower plate 600, and may not be exposed to the outside.

A protrusion 620 may protrude downward along an edge of the lower plate 600. The protrusion 620 may be coupled to the lower coupling groove 140 of the can 100. In one or more embodiments, the extension portion 420 of the second current collector plate 400 may be interposed between the protrusion 620 of the lower plate 600 and the lower coupling groove 140 of the can 100. The protrusion 620 and the extension portion 420 may be laser-welded to the can 100 to form a welding part 120. In some examples, the lower plate 600 and the extension portion 420 may be coupled to the lower coupling groove 140 in an interference fit manner. In one or more embodiments, a separate welding process may not be required between the lower plate 600, the extension portion 420, and the can 100.

Referring to FIGS. 1 and 3, the terminal portion 700 may include a base block 710 electrically connected to the first current collector plate 300, a head 720 electrically connected to the outside (e.g., able to be electrically connected to an external device or component), a fusible link 730 that connects the base block 710 and the head 720 to each other, and an insulating member 740 that insulates the terminal portion 700 and the upper plate 500 from each other. For example, the base block 710, the head 720, and the fusible link 730 may be made of aluminium.

The base block 710 may be in the shape of a disk when viewed from below, and may have a flat lower surface and a concave-convex structure on an upper surface. The lower surface of the base block 710 may be electrically connected to the first current collector plate 300 by welding, etc. (forming the welding portion 310). In some examples, the base block 710 and the first current collector plate 300 may be electrically connected by resistance welding. For example, a first protrusion 712 protruding upward may be formed at the edge of the upper surface of the base block 710, and a second protrusion 714 protruding upward may be formed at or near the center. A groove 716 may be formed concavely downward between the first protrusion 712 and the second protrusion 714. The height in a range of the lower surface of the base block 710 to the upper surface of the first protrusion 712 may be greater than the height in a range of the lower surface of the base block 710 to the upper surface of the second protrusion 714. The height in a range of the lower surface of the base block 710 to the upper surface of the groove 716 may be less than the height in a range of the lower surface of the base block 710 to the upper surface of the second protrusion 714.

The above allows the first protrusion 712 to be arranged below the second flat portion 530 and the groove 716 to be arranged below the extension portion 540. With this arrangement, a protruding portion of the terminal portion 700 is positioned on a protruding portion of the upper plate 500, and the protruding portion of the upper plate 500 is positioned on a concave portion of the terminal portion 700. Accordingly, the upper plate 500 and the terminal portion 700 may be arranged in a structure in which the upper plate 500 and the terminal portion 700 are interlocked with each other.

The head 720 is located to be spaced apart from the upper surface of the second protrusion 714 by a corresponding distance (e.g., a predetermined distance). The head 720 is a part to be electrically connected to the outside, and is electrically connected to the base block 710 by a fusible link 730. Therefore, the head 720 has a positive polarity. In one or more embodiments, the head 720 may have a disk shape. The upper surface of the head 720 may protrude from, or may be located at the same height as the upper surface of the second flat portion 530 of the upper plate 500.

The fusible link 730 mechanically and electrically connects the base block 710 and the head 720. The fusible link 730 may have a smaller diameter than the head 720, and may have a shape like an hourglass. For example, the fusible link 730 may have a structure in which a portion having a diameter gradually decreasing downward from the head 720, and a portion having a diameter gradually decreasing upward from the base block 710, are interconnected. In some embodiments, the base block 710 and the head 720 may be soldered to each other to function as the fusible link 730. For example, the shape of the fusible link 730 is not limited as long as the fusible link 730 has a smaller diameter than the head 720, and can be melted and broken if a high current is generated.

The insulating member 740 may be made of, for example, a glass-to-metal sealing (GTMS) or polymer material. The insulating member 740 may fill a portion between the base block 710 and the head 720 to insulate the upper plate 500 and the terminal portion 700 from each other, and to seal the inside of the can 100.

When the insulating member 740 is made of GTMS, glass powder may be mixed with a binder, followed by press-processing, to form the insulating member 740 into a suitable shape, and then the upper plate 500 and the terminal portion 700 are then arranged in a firing process and integrated with each other. When the insulating member 740 is made of a polymer material, the insulating member 740 is formed to have a thickness that is larger than a final distance between the upper plate 500 and the base block 710, and is then located below the upper plate 500. Then, the terminal portion 700 is coupled thereto, followed by heat treatment, to bring the insulating member 740 into close contact with the upper plate 500 and the base block 710.

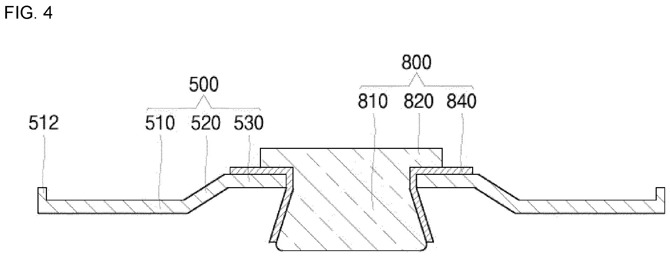

FIG. 4 is a cross-sectional view illustrating a terminal portion according to one or more other embodiments of the present disclosure.

Referring to FIG. 4, the terminal portion 800 may include a base block 810 electrically connected to the first current collector plate 300, a head 820 to be electrically connected to the outside, and an insulating member 840 that insulates the terminal portion 800 and the upper plate 500 from each other. The terminal portion 800 may be coupled from the outside to the inside of the upper plate 500. In one or more embodiments, the extension portion 540 extending vertically downward from the second flat portion 530 may be omitted from the upper plate 500. The head 820 may be located above the upper plate 500 (that is, outside the can 100), and the base block 810 may be located inside the upper plate 500 (that is, inside the can 100).

In some embodiments, the base block 810 may be compressively deformed (e.g., compressively molded) by riveting, and may be pressed in a state in which the insulating member 840 is under the upper plate 500. The base block 810 may have a diameter increasing toward the inside of the can 100. In other words, the diameter of the lower end of the base block 810 may be larger than the diameter of the upper end of the base block 810. The first current collector plate 300 may be resistance-welded to the lower surface of the base block 810 to be electrically connected thereto.

In some embodiments, the head 820 may be brought into close contact with the upper surface of the upper plate 500 in a state in which the insulating member 840 is interposed therebetween. The insulating member 840 may be bent downward from the upper surface of the upper plate 500 and extend therefrom. Accordingly, the insulating member 840 may insulate the head 820 and the base block 810 from the upper plate 500.

As described above, in the cylindrical secondary battery according to one or more embodiments of the present disclosure, a second current collector plate is interposed between a can and a lower plate to be coupled thereto, and thus, a current path of the second current collector plate may be shortened, and the internal resistance may be reduced, thereby improving the safety of the secondary battery.

In some embodiments, in the secondary battery according to the present disclosure, the second current collector plate is directly connected to the can, thereby reducing a dead space.

While the foregoing embodiments are examples for carrying out the secondary battery according to the present disclosure, which is not limited to the disclosed embodiments, it will be understood by a person skilled in the art that one or more suitable changes in form and details may be made therein without departing from the scope of the present disclosure as defined by the following claims, with functional equivalents thereof to be included therein.

## Claims

1. A battery comprising:
a can having an upper end and a lower end;
an upper plate coupled to the upper end of the can;
a lower plate coupled to the lower end of the can;
an electrode assembly inside the can, and comprising a first electrode uncoated portion extending upwardly, and a second electrode uncoated portion extending downwardly;
a first current collector plate electrically connected to the first electrode uncoated portion; and
a second current collector plate electrically connected to the second electrode uncoated portion, and coupled between the lower end of the can and the lower plate.

2. The battery as claimed in claim 1, wherein the second current collector plate comprises:
a flat portion electrically connected to the second electrode uncoated portion; and
an extension portion extending from the flat portion, and electrically connected to the can.

3. The battery as claimed in claim 2, wherein an inner surface of the lower end of the can defines a lower coupling groove at which the lower end of the can is coupled to the extension portion.

4. The battery as claimed in claim 3, wherein the lower plate comprises a protrusion protruding downwardly from an edge thereof, and coupled to the lower end of the can adjacent the lower coupling groove, and
wherein the extension portion is between the protrusion and the lower end of the can adjacent the lower coupling groove.

5. The battery as claimed in claim 3 or claim 4, wherein a thickness of the lower end of the can adjacent the lower coupling groove is less than a thickness of other regions of the can.

6. The battery as claimed in any one of claims 3 to 5, wherein the extension portion comprises:
a first region bent from, and extending downwardly from, the flat portion;
a second region bent from, and extending laterally from, the first region; and
a third region bent from, and extending downwardly from, the second region,
wherein the second region and the third region contact the lower end of the can adjacent the lower coupling groove.

7. The battery as claimed in any one of claims 1 to 6, wherein the second current collector plate and the lower plate are electrically connected to the lower end of the can by welding.

8. The battery as claimed in any one of claims 1 to 6, wherein the lower plate and the second current collector plate are coupled to the lower end of the can in an interference fitting manner.

9. The battery as claimed in any one of claims 1 to 8, wherein the lower plate defines a notch at an inner surface thereof.

10. The battery as claimed in any one of claims 1 to 9, further comprising:
an upper insulator between the first current collector plate and the upper plate; and
a spacer between the second current collector plate and the lower plate.

11. The battery as claimed in any one of claims 1 to 10, further comprising a terminal portion comprising a base block electrically connected to the first current collector plate, a head extending above the base block and protruding above the upper plate, and an insulating member between the upper plate and both the base block and the head.

12. The battery as claimed in claim 11, wherein the terminal portion further comprises a fusible link connecting the base block and the head, and having a diameter that is less than a diameter of the head.

13. The battery as claimed in any one of claims 1 to 12, wherein an inner surface of the upper end of the can defines an upper coupling groove at which the upper end of the can is coupled to the upper plate.

14. The battery as claimed in any one of claims 1 to 13, wherein the battery comprises a cylindrical secondary battery.
